# EUROPEAN PATENT SPECIFICATION

(11) **EP 4 217 215 B1**
(45) Date of publication and mention of the grant of the patent: **05.03.2025**
(21) Application number: 21801257.3
(22) Date of filing: 24.09.2021
(51) Int. Cl.: B60G 11/02, B60G 11/10, B60G 11/04

(54) **A MULTI-STAGE SPRING SYSTEM SUITABLE FOR USE IN VEHICLES**
MEHRSTUFIGES FEDERSYSTEM ZUR VERWENDUNG IN FAHRZEUGEN
SYSTÈME DE RESSORT À ÉTAGES MULTIPLES APPROPRIÉ POUR UNE UTILISATION DANS DES VÉHICULES

(30) Priority: 25.09.2020 TR 202015285
(43) Date of publication of application: 02.08.2023
(73) Proprietor: Sabanci Üniversitesi, 34956 Tuzla/Istanbul (TR)
(72) Inventor: YILDIZ, Mehmet, 34956 Tuzla/Istanbul (TR); KISA, Erdal, 34956 Tuzla/Istanbul (TR); UZUN, Fatih, 34956 Tuzla/Istanbul (TR)
(74) Representative: Genç Ilhan, Oznur
(86) International application number: PCT/TR2021/050979
(87) International publication number: WO 2022/066132

(56) References cited:
- EP-A2- 0 034 422
- WO-A1-2015/005831
- WO-A1-2016/099343
- CN-B- 109 404 458

## Description

### Technical Field of the Invention

The present invention relates to suspension systems used in vehicles and more particularly to a multi-stage spring system, developed for suspension systems used in road vehicles, comprising springs with different spring constants.

### Background Art

Advanced suspension systems are preferred for safer and more comfortable driving of the vehicles. Suspension systems ensure the connection between the chassis and the wheels of the vehicles and absorb the vibrations originating from the road, thereby preventing the transmission of these forces to the vehicle body. It is common to use leaf spring suspension systems in heavy vehicles. The task of the leaf springs is to absorb the loads on the axle and prevent damages to the vehicle equipment. The weights of the components that are not carried by the suspension system in vehicles are defined as "unsprung mass", and the leaf spring suspension system itself is included in this class.

In road vehicles with suspension system, wheels, in-wheel components, axles and suspension elements are considered as unsprung mass. The unsprung mass has significant effects on driving comfort and performance. Reducing the unsprung mass is one of the important criteria in the design phase. Studies are conducted to reduce the weight of the metal leaf spring suspension systems used today.

When a moving vehicle passes over a road bump, the undesired vibrations are in part absorbed by the bending action of the flat metal parts arranged in a bundle and acting as a spring. In this technique, the rigidity value of the overlapping metal springs is used and it is ensured that all parts operate in groups at the entrance of the road. In this way, the leaf springs absorb the movement energy and prevent energy transfer to the chassis. Similarly, if the leaf spring suspension systems have excessive stiffness values to absorb the energy of the road bump they encounter, then the load is not felt more on the chassis side. For example, a suspension system with low spring capability transfers most of the load to the structure without absorbing it, as it is more rigid at low disruptive inputs. On the other hand, in suspension systems with high spring capability, some of the energy is absorbed at high disruptive inputs and the remaining part is transferred to the structure.

US 4750718 discloses a dual rate leaf spring construction, which is produced from fiber reinforced composite material in order to reduce the unsprung mass. Therein, it is disclosed that the composite materials are used in leaf spring design and can be sized to have different stiffness values; on the other hand, the dual rate composite springs used in US 4750718 are mounted in contact with each other in the vertical axis. For this reason, the decrease in the mechanical strength of the leaf springs resulting from the friction force, over time, causes frequent part replacements and performance reduction in suspension systems.

WO 2015/005831 A1 discloses an axle assembly including a front axle having a leaf spring assembly which comprises a pair of spaced parallel upper leaf springs and a lower leaf spring on each side of a vehicle frame.

WO 2016/099343 A1 discloses a vehicle suspension arrangement comprising a leaf spring assembly with at least two leaf springs which are arranged, during use in a vehicle, with a longitudinal extension generally coinciding with the longitudinal extension of said vehicle.

CN 109 404 458 B discloses a shock absorber comprising a damper mount and a first damper structure wherein said first damper structure is located below the damper mount and is fixedly coupled to the plurality of damper mounts.

Another teaching in the prior art is described in the U.S. patent application no. US2019111749 (A1). In said patent application, a dual rate composite leaf spring is disclosed which can operate in a gradual manner. However, in said patent application, a staged leaf spring system made of a composite material can be used by means of an elastic damper element and connecting arm.

US4988080A discloses a suspension system comprising a leaf spring comprising a single fiber reinforced resin, connecting means for connecting the ends of the spring to a vehicle frame, axle mounting means for connecting the central portion of the spring to a vehicle axle, and a resilient bumper having an upper end connected to the frame of the vehicle and disposed to engage the upper surface of the leaf springs under load conditions. The bumper mentioned in said patent document has a low spring rate on initial axle travel during loading and a higher spring rate at a second position of axle travel during increased loading. However, the suspension system must include a buffer in order for the system to operate.

### Object of the Invention

Primary object of the present invention is to provide solutions to the above-mentioned technical problems, suitable for use in vehicles.

Another object of the present invention is to provide an effective and modular spring system for use in suspension systems, which is easy to manufacture and assemble.

Another object of the present invention is to provide a leaf spring assembly in which the unsprung mass of the vehicles is significantly reduced.

Another object of the present invention is to provide a spring system with different spring rates that will gradually and effectively respond to different load values acting on the vehicle in which it is used.

Another object of the present invention is to provide a spring system whose spring constant differs according to the size of the disruptive input from the road and the performance criteria expected from the platform on which the suspension system is integrated.

Another object of the present invention is to provide a multi-stage spring system using composite material, in which the effects of environmental factors such as thermal loads and corrosion are reduced.

Still another object of the present invention is to provide an efficient multi-stage spring system with a high spring capability at low disruptive inputs and a low spring capability at high disruptive inputs.

The other objects of the present invention will be apparent from the description, claims, and drawings accompanying the claims in the next section.

### Brief Description of the Invention

The present invention relates to a multi-stage spring system according to claim 1.

In a preferred embodiment of the invention, thermosetting resins can be used in the production of said leaf springs. In this way, there are provided a production process consisting of raw materials that are easy-to-manufacture and accessible, and a suspension system that is easy-to-manufacture.

In a preferred embodiment of the invention, said leaf springs are made of the same material. Making the springs from the same material will facilitate the production processes and provide a cost advantage with the reduction of raw material inputs.

In a preferred embodiment of the invention, the leaf springs are made of thermosetting resin. Thermoset resins are used in many different fields. In this way, their mechanical behavior can be predicted even under different physical conditions. In a preferred embodiment of the invention, said first and second ends include at least one fixing hole matching with a fixing slot located in the connection portion and suitable for the passage of the at least one fixing element therethrough. Thus, a more durable spring system is provided and the service life of the spring system is increased.

In a preferred embodiment of the invention, it comprises a supporting member interposed between the first and second ends of said leaf springs and said connection portion.

In a preferred embodiment of the invention, said supporting member is made of elastomeric material.

In a preferred embodiment of the invention, it is configured to be connected, when in use, to a chassis positioned in the direction of the longitudinal axis of a vehicle .

In a preferred embodiment of the invention, said connection portion is made of steel. In addition to being a fast and economical material to process, steel has high strength and provides mechanical durability, especially in heavy tonnage vehicles.

In a preferred embodiment of the invention, said leaf springs are located side by side. Due to such side-by-side positioning, the problems of friction and wear, which are often observed when the springs are arranged one above the other, is solved without requiring an additional structure and cost.

In the invention, three leaf springs with concave surfaces are positioned in the direction of the horizontal axis.

In the invention, the leaf spring in the middle of said three leaf springs is, when in use, positioned higher with respect to the ground plane. In addition, apart from the leaf spring in the middle, the other two leaf springs are symmetrical and made of the same material. The fact that they are made of the same material will facilitate modeling while providing ease of production and assembly.

In a preferred embodiment of the invention, the length, thickness or width of at least one leaf spring is different from the other leaf springs. In this way, a multiple rate leaf spring system is provided.

### Brief Description of the Drawings

The multi-stage spring system of the present invention having different spring rates is illustrated in the accompanying drawings for better understanding thereof, which drawings are attached for better explaining the present invention and are not limiting the invention.
Figure 1 is a perspective view of a multi-stage spring system with different spring rates according to the present invention.
Figure 2 is an exploded view of the multi-stage spring system with different spring rates according to the present invention.
Figure 3 is a frontal view of the multi-stage spring system with different spring rates according to the present invention.
Figure 4 is a side view of the multi-stage spring system with different spring rates offered in accordance with the present invention.

### Detailed Description of the Invention

The invention will now be described in detail with reference to the accompanying drawings and the list of reference numerals used in the appended drawings is as follows.
1. Multi-stage spring system
2. Leaf spring
   21. Central portion
   22. First end
   23. Second end
   24. Fixing hole
3. Connection portion
   31. Connection slot
   32. Fixing slot
4. Fixing member
   41. Nut
+Y / -Y Longitudinal axis of the leaf spring
-X/+X Horizontal axis
H Height difference

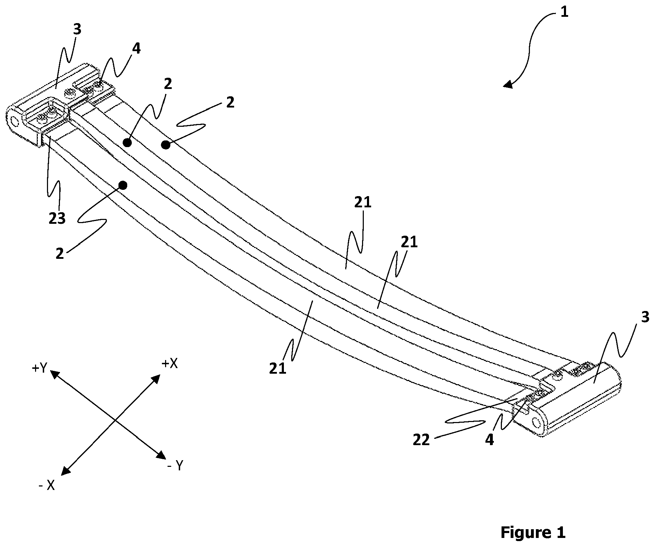

A multi-stage spring system (1) with different spring rates according to the present invention comprises leaf springs (2) with a predetermined radius of curvature suitable to contain various rates of stiffness, as shown in Fig. 1. There are a central portion (21) in the middle of the leaf springs (2); a first end (22) and a second end (23) at opposite sides of said central portion (21). There is a connection portion (3) comprising at least one connection slot (31) suitable for disposing the leaf springs (2). Said leaf springs (2) are made of fiber-reinforced composite material suitable for use in suspension systems that require leaf spring (2) systems with different spring constants. In accordance with the teaching of the invention, said leaf springs (2), which can allow the springs having different stiffness values to operate gradually while vehicles are passing over the bumps of different heights, are positioned in the horizontal axis (-X/+X) extending perpendicular to the longitudinal axis (+Y/-Y) and at a predetermined spacing from each other. Preferably, 3 leaf springs (2) with at least one having a different rate of stiffness are arranged in such a way that they are substantially side by side. The present invention provides a leaf spring (2) made of composite material in order to provide the same, or better, functional structure as a material alternative to metal leaf springs (2) used in vehicles. Thus, it is aimed to reduce weight and prevent possible corrosion.

There are various physical and material-based parameters that determine the spring rate of the elements in the multi-stage composite leaf spring system (1) described within the scope of the present invention. For example, in addition to physical parameters such as the length, thickness and width of each element, the elasticity modules of the elements are also taken into account. A suspension system with a low spring rate causes large oscillations under low loading conditions, while providing an advantage on roads with low disruptive input. However, in other cases, it acts more flexibly than it should be. The spring constant should differ according to the size of the disruptive input from the road and the performance criteria expected from the platform on which the suspension system is integrated. The present invention is able to produce variable stage composite leaf spring (2) with different spring rates depending on the platform type, due to the flexible design opportunity provided by the composite material, taking into account the variables mentioned above. With the leaf spring (2) suspension system, which consists of layered composites having predetermined stacking sequences, instead of metal alloys used in the prior art techniques, the unsprung mass of the vehicle is also significantly reduced.

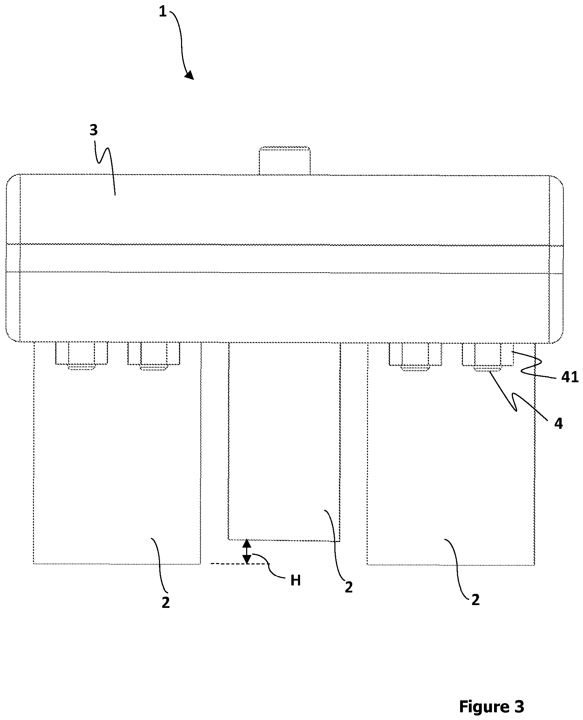

The invention includes leaf springs (2) with two different stiffness values. As shown in Fig. 3, the multi-stage spring system (1) is composed of three leaf springs (2). The radius of curvature of the central portion (21) of the leaf spring (2), which is positioned in the middle of said three leaf springs (2), is considerably shorter than the other two springs in the directions of -X and +X. Thus, by changing the lengths of the leaf springs (2), a multi-stage spring system (1) with two different spring rates is obtained. For a dual rate composite structure to functionally have the same performance as the metal leaf springs (2), high and medium weight composite structures can be preferred. Another advantage of the present invention is that the springs with two different stiffness values operate gradually during the passage over the road bumps of different heights, thus absorbing as much energy as necessary. The double-stage leaf spring (2) suspension systems developed for this purpose, forming an embodiment of the invention, can operate at different damping speeds according to different road input densities.

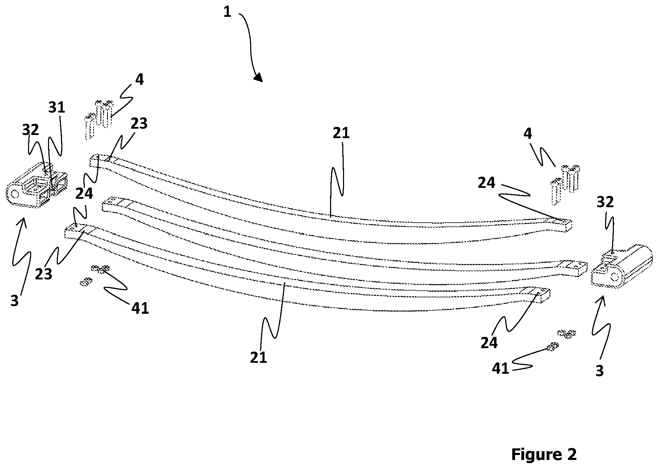

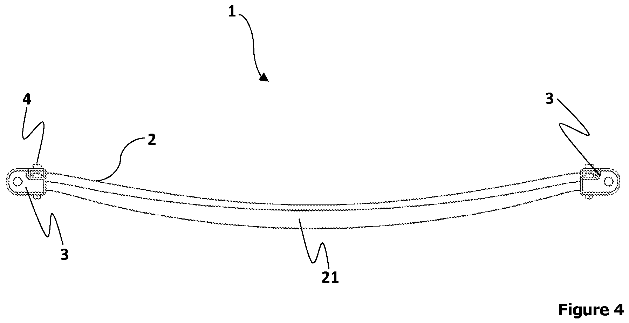

Referring to Fig. 4, in another preferred embodiment of the invention, the connection portion (3) used in the multi-stage spring system (1) is made of metal, preferably steel. The die casting method can be preferred as the production method of the supporting connection parts that can be used as the connection portion (3), especially considering the needs for low-cost mass production in the automotive sector. Referring to Fig. 2, in the said embodiment of the invention, there is at least one fixing slot (32) to be used in the assembly of the leaf springs (2) in the connection portion (3). After casting, milling can be applied to said fixing slots (32) in order to provide tolerance values. At the first and second ends (22,23) of the leaf springs (2) used in the multi-stage spring system (1), there is at least one fixing hole (24) suitable for positioning of a fixing element (4), which can be matched with the fixing slot (32) located in the connection portion (3). The fixing hole (24) preferably has a circular cross-section; the fixing hole (24) can be removed according to different types of connection. Referring to Fig. 2, said fixing element (4) may be an elongated bolt, or it may be a screw or other similar fixing element. The fixing element (4) is preferably used together with a nut (41) that will match a tip portion to ensure better holding thereof, after having been passed through the appropriate holes and slots. The number of the nuts (41) that are used are preferably same with the number of fixing elements (4).

In another possible embodiment of the invention, in a multi-stage spring system (1) with different spring rates; a supporting member is interposed between the first and second ends (22, 23) of the leaf springs (2) and the said connection portion (3). Said supporting member can be made of elastomeric material. The supporting member increases comfort and driving safety in heavy vehicle systems.

If the multi-stage spring system (1) with different spring rates is used in road vehicles, said connection portion (3) can be configured to be connected to an axle which is positioned between the first and second ends (22,23) of the leaf springs (2) and extends transversely to the said leaf springs (2). The leaf springs (2) used within the scope of the invention absorb the loads on the axle and prevent any damage to the driver and equipment in the vehicle. During the operation of the vehicle, the loads on the roads vary, so the reaction forces in the axle area change accordingly. In the suspension systems with leaf springs (2), which are widely used in the prior art heavy vehicles, the springs with excessive stiffness values are used to absorb the energy of the road bump they encounter, thereby causing more road irregularity to be transferred to the passenger. With the multi-stage spring system (1) with different spring rates, if a difference is created between the absorbing ability at low loads and the absorbing ability at high loads, the desired forces in the axle area can be controlled and a better driving comfort can be achieved.

In another preferred embodiment of the invention, the multi-stage spring system (1) with different spring rates is configured to be connected, when in use, to a chassis positioned in the direction of the longitudinal axis of a vehicle .

Referring to Figs. 1 and 3, said leaf springs (2) are 3 and they are substantially arranged side by side. Said three leaf springs (2) with concave surfaces are positioned in the direction of the horizontal axis (-X/+X) and the leaf spring (2) in the middle of the three leaf springs (2) is kept higher with respect to the ground plane when in use. As can be better seen in Fig. 3, there is a height difference (H) between the central portion (21) of the leaf spring (2) in the middle and the leaf springs (2) on its right and left. This height difference (H) can be reduced and decreased according to the suspension system where the multi-stage spring system (1) is to be used. In this way, when in use, during an overload on the system, the leaf spring (2) in the middle is also activated and a gradual system is obtained. Thus, a better absorbing is achieved at different loads. In a preferred embodiment of the invention, apart from the leaf spring (2) in the middle, the other two leaf springs (2) are symmetrical and made of the same material. Thus, while the leaf springs (2) in the outer part enable a balanced absorbing, while the leaf spring (2) in the middle is activated in case of unbalanced loads on the system.

In the preferred embodiment of the invention, the length, thickness or width of at least one leaf spring (2) is selected to be different from the other leaf springs (2). Said system describes a multi-stage spring system (1), especially for use in road vehicles. It can be used in cars, or it can also be used in vehicles such as light-heavy commercial trucks, train cars, armored personnel carriers, etc.

The production process of the leaf spring (2) described within the scope of the invention, as well as the use thereof, differ from the state of the art. In general, the production method of the multi-stage spring system (1) developed for use in suspension systems in vehicles includes the following steps: determining an amount of the fiber and resin according to the vehicle where they are to be used; curing the fiber and resin in accordance with temperature and pressure values using a suitable mold and producing more than one leaf spring (2) with at least two different rates of stiffness by applying hot press; extracting the hot pressed products from the mold, removing the excess material around the hot pressed products, and cutting them into the specified size and length; connecting the first and second ends (22, 23) of each produced leaf spring (2) to the connection portion (3) having at least one connection slot (31); and positioning the leaf springs (2) in the direction of the horizontal axis (-X/+X) extending perpendicular to the longitudinal axis (+Y/-Y) and at a predetermined spacing from each other.

Within the scope of the invention, the leaf springs (2) used in the multi-stage spring system (1) with different spring rates can be made of different materials, or from the same material. In a preferred embodiment of the invention, it is preferred that the leaf springs (2) used in the multi-stage spring system (1) are produced using a continuous fiber-reinforced composite material. In embodiments where continuous fiber-reinforced composite is used, the sector and conditions in which the product will be used are decisive in determining the type of the fiber and resin. In a preferred embodiment of the invention, is may be convenient to use glass fiber reinforced composites, considering the consumable costs, operating condition loads, material strength and manufacturability in the automotive industry.

Thermoset resins can be used in the resin system used in the production phase of the said leaf springs (2). Thermoset resins greatly improve the mechanical properties of the materials, providing impact resistance, improved chemical resistance, thermal resistance and structural integrity. When the leaf springs (2) made of composite material and metal are compared, another technical effect achieved by the invention is that the composite materials are more resistant to environmental factors such as thermal loads and corrosion. The advantages of the composite materials include high tensile and bending strength, the ability to produce such products as one piece in those systems where the production process is very difficult and involving a large number of complex parts, reduction in vibration and shock absorbing properties.

In the preferred embodiment of the said production method, 3 leaf springs (2) are produced. The leaf spring (2) in the middle of these three leaf springs (2) is, when in use, positioned higher with respect to the ground plane.

## Claims

1. A multi-stage spring system (1) suitable for use in suspension systems in vehicles, comprising three leaf springs (2), each including
a central portion (21) with a predetermined radius of curvature between an opposing first end (22) and a second end (23), and
at least two opposing connection portions (3) having at least one connection slot (31) suitable for connecting said first and second ends (22, 23),
**characterized in that**
at least two leaf springs (2) have different rate of stiffness;
the leaf springs (2) are made, at least partially, of fiber-reinforced composite material; and
the three leaf springs (2) with concave surfaces are positioned in the direction of the horizontal axis (-X/+X) extending perpendicular to a longitudinal axis (+Y/-Y) of the leaf springs (2) and at a predetermined spacing from each other, in such a manner to allow it to operate gradually based on the magnitude of the disruptive input from the road when the vehicle with the leaf springs is in use,
wherein the radius of curvature of the central portion (21) of the leaf spring (2) which is positioned in the middle of said three leaf springs (2) is considerably shorter than the other two springs in the horizontal direction and the leaf spring (2) in the middle of said three leaf springs (2) is when in use positioned higher with respect to the horizontal axis (X).

2. A multi-stage spring system (1) according to claim 1, wherein said leaf springs (2) are made of the same material.

3. A multi-stage spring system (1) according to claim 1 or 2, wherein the leaf springs (2) are made of thermoset resin.

4. A multi-stage spring system (1) according to any one of the preceding claims, wherein said first and second ends (22, 23) include at least one fixing hole (24) matching with a fixing slot (32) located in the connection portion (3) and suitable for the passage of the at least one fixing element (4) therethrough.

5. A multi-stage spring system (1) according to any one of the preceding claims, comprising a supporting member interposed between the first and second ends (22, 23) of said leaf springs (2) and said connection portion (3).

6. A multi-stage spring system (1) according to claim 5, wherein said supporting member is made of elastomeric material.

7. A multi-stage spring system (1) according to any one of the preceding claims, wherein said multi-stage spring system (1) is configured to be connected, when in use, to a chassis positioned in the direction of the longitudinal axis of a vehicle.

8. A multi-stage spring system (1) according to any one of the preceding claims, wherein said connection portion (3) is made of steel.

9. A multi-stage spring system (1) according to any one of the preceding claims, wherein said leaf springs (2) are arranged side by side.

10. A multi-stage spring system (1) according to claim 1, wherein apart from the leaf spring (2) in the middle, the other two leaf springs (2) are symmetrical to each other and made of the same material.

11. A multi-stage spring system (1) according to claim 1 wherein the length, thickness or width of at least one leaf spring (2) is different from the other leaf springs (2).

12. A vehicle comprising a multi-stage spring system (1) according to any one of the preceding claims.

## Patentansprüche

1. Mehrstufiges Federsystem (1), das zur Verwendung in Aufhängungssystemen in Fahrzeugen geeignet ist und drei Blattfedern (2) umfasst, die jeweils umfassen
einen mittleren Abschnitt (21) mit einem vorbestimmten Krümmungsradius zwischen einem gegenüberliegenden ersten Ende (22) und einem zweiten Ende (23) und
mindestens zwei gegenüberliegende Verbindungsabschnitte (3) mit mindestens einem Verbindungsschlitz (31), der zum Verbinden des ersten und zweiten Endes (22, 23) geeignet ist,
**dadurch gekennzeichnet, dass**
mindestens zwei Blattfedern (2) haben unterschiedliche Steifigkeitswerte;
die Blattfedern (2) zumindest teilweise aus faserverstärktem Verbundwerkstoff hergestellt sind; und
die drei Blattfedern (2) mit konkaven Oberflächen in Richtung der horizontalen Achse (-X/+X), die sich senkrecht zu einer Längsachse (+Y/-Y) der Blattfedern (2) erstreckt, und in einem vorbestimmten Abstand voneinander so positioniert sind, dass sie in Abhängigkeit von der Größe des Störeinflusses von der Straße stufenweise arbeiten können, wenn das Fahrzeug mit den Blattfedern in Betrieb ist,
wobei der Krümmungsradius des mittleren Abschnitts (21) der Blattfeder (2), der in der Mitte der drei Blattfedern (2) positioniert ist, wesentlich kürzer ist als die anderen beiden Federn in der horizontalen Richtung und die Blattfeder (2) in der Mitte der drei Blattfedern (2) im Gebrauch höher in Bezug auf die horizontale Achse (X) positioniert ist.

2. Mehrstufiges Federsystem (1) nach Anspruch 1, wobei die Blattfedern (2) aus gleichem Material bestehen.

3. Mehrstufiges Federsystem (1) nach Anspruch 1 oder 2, wobei die Blattfedern (2) aus duroplastischem Harz hergestellt sind.

4. Mehrstufiges Federsystem (1) nach einem der vorhergehenden Ansprüche, wobei das erste und das zweite Ende (22, 23) mindestens ein Befestigungsloch (24) aufweisen, das mit einem Befestigungsschlitz (32) zusammenpasst, der sich in dem Verbindungsabschnitt (3) befindet und für den Durchgang des mindestens einen Befestigungselements (4) geeignet ist.

5. Mehrstufiges Federsystem (1) nach einem der vorhergehenden Ansprüche, mit einem Stützelement, das zwischen den ersten und zweiten Enden (22, 23) der Blattfedern (2) und dem Verbindungsabschnitt (3) angeordnet ist.

6. Mehrstufiges Federsystem (1) nach Anspruch 5, wobei das Stützelement aus einem elastomeren Material hergestellt ist.

7. Mehrstufiges Federsystem (1) nach einem der vorhergehenden Ansprüche, wobei das mehrstufige Federsystem (1) so konfiguriert ist, dass es im Gebrauch mit einem Fahrgestell verbunden ist, das in Richtung der Längsachse eines Fahrzeugs positioniert ist.

8. Mehrstufiges Federsystem (1) nach einem der vorhergehenden Ansprüche, wobei der Verbindungsabschnitt (3) aus Stahl besteht.

9. Mehrstufiges Federsystem (1) nach einem der vorhergehenden Ansprüche, wobei die Blattfedern (2) nebeneinander angeordnet sind.

10. Mehrstufiges Federsystem (1) nach Anspruch 1, wobei außer der mittleren Blattfeder (2) die beiden anderen Blattfedern (2) symmetrisch zueinander sind und aus gleichem Material bestehen.

11. Mehrstufiges Federsystem (1) nach Anspruch 1, wobei die Länge, Dicke oder Breite mindestens einer Blattfeder (2) sich von den anderen Blattfedern (2) unterscheidet.

12. Fahrzeug mit einem mehrstufigen Federsystem (1) nach einem der vorhergehenden Ansprüche.

## Revendications

1. - Système de ressorts à étages multiples (1) approprié pour être utilisé dans des systèmes de suspension dans des véhicules, comprenant trois ressorts à lames (2) comprenant chacun une partie centrale (21) avec un rayon de courbure prédéterminé entre une première extrémité (22) et une seconde extrémité (23) opposées, et au moins deux parties de liaison (3) opposées ayant au moins une fente de liaison (31) appropriée pour relier lesdites première et seconde extrémités (22, 23),
**caractérisé par le fait que**
au moins deux ressorts à lames (2) ont des taux de raideur différents ;
les ressorts à lames (2) sont réalisés, au moins partiellement, en un matériau composite renforcé de fibres ; et
les trois ressorts à lames (2) à surfaces concaves sont positionnés dans la direction de l'axe horizontal (-X/+X) s'étendant perpendiculairement à un axe longitudinal (+Y/-Y) des ressorts à lames (2) et à un espacement prédéterminé les uns des autres, de façon à permettre à ceux-ci de fonctionner progressivement en fonction de l'amplitude de l'entrée perturbatrice provenant de la route lorsque le véhicule équipé des ressorts à lames est en utilisation,
dans lequel le rayon de courbure de la partie centrale (21) du ressort à lames (2) qui est positionné au milieu desdits trois ressorts à lames (2) est considérablement plus court par rapport aux deux autres ressorts dans la direction horizontale, et le ressort à lames (2) au milieu desdits trois ressorts à lames (2) est, lorsqu'il est utilisé, positionné plus haut par rapport à l'axe horizontal (X).

2. - Système de ressorts à étages multiples (1) selon la revendication 1, dans lequel les ressorts à lames (2) sont réalisés en le même matériau.

3. - Système de ressorts à étages multiples (1) selon la revendication 1 ou 2, dans lequel les ressorts à lames (2) sont réalisés en résine thermodurcie.

4. - Système de ressorts à étages multiples (1) selon l'une quelconque des revendications précédentes, dans lequel lesdites première et seconde extrémités (22, 23) comprennent au moins un trou de fixation (24) en correspondance avec une fente de fixation (32) située dans la partie de liaison (3) et appropriée pour le passage de l'au moins un élément de fixation (4) à travers celle-ci.

5. - Système de ressorts à étages multiples (1) selon l'une quelconque des revendications précédentes, comprenant un élément de support interposé entre les première et seconde extrémités (22, 23) desdits ressorts à lames (2) et ladite partie de liaison (3).

6. - Système de ressorts à étages multiples (1) selon la revendication 5, dans lequel ledit élément de support est réalisé en matériau élastomère.

7. - Système de ressorts à étages multiples (1) selon l'une quelconque des revendications précédentes, dans lequel ledit système de ressorts à étages multiples (1) est configuré pour être relié, lorsqu'il est utilisé, à un châssis positionné dans la direction de l'axe longitudinal d'un véhicule.

8. - Système de ressorts à étages multiples (1) selon l'une quelconque des revendications précédentes, dans lequel ladite partie de liaison (3) est réalisée en acier.

9. - Système de ressorts à étages multiples (1) selon l'une quelconque des revendications précédentes, dans lequel lesdits ressorts à lames (2) sont disposés côte à côte.

10. - Système de ressorts à étages multiples (1) selon la revendication 1, dans lequel, à part le ressort à lames (2) du milieu, les deux autres ressorts à lames (2) sont symétriques l'un par rapport à l'autre et sont réalisés en le même matériau.

11. - Système de ressorts à étages multiples (1) selon la revendication 1, dans lequel la longueur, l'épaisseur ou la largeur d'au moins un ressort à lames (2) est différente de celle des autres ressorts à lames (2).

12. - Véhicule comprenant un système de ressorts à étages multiples (1) selon l'une quelconque des revendications précédentes.
